# EUROPEAN PATENT SPECIFICATION

(11) **EP 3 797 012 B1**
(45) Date of publication and mention of the grant of the patent: **03.07.2024**
(21) Application number: 19737596.7
(22) Date of filing: 21.05.2019
(51) Int. Cl.: B23K 9/095, B23K 9/10

(54) **WELDING POWER SUPPLIES AND USER INTERFACES FOR WELDING POWER SUPPLIES**
SCHWEISSSTROMVERSORGUNGEN UND BENUTZERSCHNITTSTELLEN FÜR SCHWEISSSTROMVERSORGUNGEN
ALIMENTATIONS ÉLECTRIQUES DE SOUDAGE ET INTERFACES UTILISATEUR POUR DES ALIMENTATIONS ÉLECTRIQUES DE SOUDAGE

(30) Priority: 21.05.2018 US 201862674440 P; 20.05.2019 US 201916417425
(43) Date of publication of application: 31.03.2021
(73) Proprietor: Illinois Tool Works, Inc., Glenview, Illinois 60025 (US)
(72) Inventor: VANDENBERG, Michael P., Glenview, Illinois 60025 (US); HAMMERS, Brian J., Glenview, Illinois 60025 (US); NELSON, Andrew D., Glenview, Illinois 60025 (US); LEISNER, John C., Glenview, Illinois 60025 (US); CHRISTOPHER, Mark, Glenview, Illinois 60025 (US); CARTER, Tiffany, Glenview, Illinois 60025 (US)
(74) Representative: HGF
(86) International application number: PCT/US2019/033266
(87) International publication number: WO 2019/226623

(56) References cited:
- US-A- 6 075 225
- US-A1- 2015 122 781
- US-B2- 8 237 087
- US-B2- 8 604 389
- US-B2- 8 658 942

## Description

### BACKGROUND

This present invention relates generally to welding systems and, more particularly, to a welding equipment interface, a welding-type power supply comprising such interface, and a method, see claims 1, 10 and 11).

Myriad interface types have been used for conventional power supplies. Conventional user interface for power supplies either rely on the operator to manually select the appropriate parameters, such as voltage and wire feed speed, or rely on the operator specifying the material thickness and then calculating appropriate parameters from the material thickness.
US 2015/122781 A1 (describing all the features and steps of the preamble of claims 1, 10 and 11) discloses a system and method for selecting weld parameters.
US 8604389 B2 discloses a system and method for welding wire feed speed control.
US 8237087 B2 discloses a welding system with torque motor wire drive.

### SUMMARY

The present invention relates to a welding equipment interface, a welding-type power supply comprising such interface, and a method as defined in claims 1, 10 and 11 respectively.

Further embodiments of the present invention are defined in the dependent claims.

### BRIEF DESCRIPTION OF THE DRAWINGS

FIG. 1A is a schematic diagram of an example welding system including a power supply having a user interface to configure a welding process, in accordance with aspects of this disclosure.
FIG. 1B is a schematic diagram of another example welding system including a wire feeder having a user interface to configure a welding process, in accordance with aspects of this disclosure.
FIG. 1C is a schematic diagram of another example welding system including a user interface connected to a welding power supply and/or a wire feeder to configure a welding process, in accordance with aspects of this disclosure.
FIGS. 2A and 2B illustrate an example user interface that may be used to implement the user interface of FIG. 1A.
FIGS. 3A and 3B illustrate example input devices and a display device of the user interface of FIGS. 2A and 2B for setting up a welding process.
FIG. 4 illustrates the example input devices and the display device of FIGS. 3A and 3B when a weld process has been set up.
FIGS. 5A and 5B illustrates the example user interface of FIGS. 2A and 2B for synergically adjusting voltage and wire feed speed.
FIGS. 6A and 6B illustrates the example user interface of FIGS. 2A and 2B for adjusting voltage.
FIG. 7 is a flowchart representative of example machine readable instructions which may be executed by the example welding power supply of FIG. 1A to set up a welding process using a user interface.
FIG. 8 is a flowchart representative of example machine readable instructions which may be executed by the example welding power supply of FIG. 1A to control power conversion circuitry and/or a wire feeder based on a welding process.
FIG. 9 illustrates a user interface not covered by the present invention, and that may be used to implement the user interface of FIG. 1A.

The figures are not necessarily to scale. Where appropriate, similar or identical reference numbers are used to refer to similar or identical components.

### DETAILED DESCRIPTION

Disclosed example power supplies, user interfaces, and methods allow for simple and intuitive user setup of a welding power source and/or wire feeder. An example user interface for welding equipment includes a simple five button interface for selecting weld process, electrode wire type, electrode wire size, shielding gas composition, and confirming selections. Disclosed example power supplies and user interfaces include a separate knob to adjust wire feed speed, which causes control circuitry of the welding equipment to adjust welding parameters appropriately for the selected settings. Disclosed example power supplies and user interfaces display a recommended material thickness based on the wire feed speed, which depend also on the selected weld program, parameters, and/or other settings.

The initial selection process of the weld process, electrode wire type, electrode wire size, and shielding gas composition can assist the user to select a preferred (e.g., optimal) set of weld parameters. The selection of the weld process, electrode wire type, electrode wire size, and shielding gas composition is achieved by repeatedly pressing a corresponding button to cycle through a sequence of permissible values for the corresponding parameter. As the operator is cycling through the sequences of values, the current value and parameter may be displayed on a display. In some examples, the interface limits the available values for wire type and/or wire size parameters based on previously-selected parameters, such as weld process. Similarly, the gas type values may be constrained to a subset of all available gases based on the selected process, wire type and size. Example user interfaces reduce the number of buttons that an operator needs to use and reduce setup times.

Once the process, wire type/size and gas have been selected, the user adjusts the wire feed speed to the desired level. When adjusting the wire feed speed, the display provides according to the present invention a recommended material thickness or range of thicknesses based on the wire feed speed. As the wire feed speed is adjusted, the voltage setpoint is automatically adjusted as well based on stored voltage-wire feed speed relationships and selected parameters. However, the operator can also manually adjust the voltage to achieve the desired welding performance. Indicators, such as LEDs having shapes such as small arrows and a star, next to the voltage display indicate whether the setting is at the default or preferred range or voltage (e.g., a star), higher than the preferred voltage or range (up arrow), or lower than the preferred voltage or range (down arrow).

As used herein, the term "welding program" includes at least a set of welding parameters for controlling a weld. A welding program may further include other software, algorithms, processes, or other logic to control one or more welding-type devices to perform a weld.

Disclosed example welding equipment interfaces include: a first button, a second button, a third button, and a fourth button; a first input device configured to adjust a wire feed speed; and control circuitry configured to: in response to an input from the first button, select a welding process of power conversion circuitry based on a sequence of welding processes; in response to an input from the second button, select an electrode wire type based on a sequence of electrode wire types; in response to an input from the third button, select an electrode wire size based on a sequence of electrode wire sizes; in response to an input from the fourth button, select a shielding gas composition from a sequence of shielding gas compositions; select a welding program based on the welding process, the electrode wire type, the electrode wire size, and the shielding gas composition; in response to input from the first input device, select a wire feed speed; based on the selected wire feed speed, automatically select a voltage based on a relationship between the wire feed speed and the voltage, the relationship based on at least one of the selected welding process, the electrode wire type, the electrode wire size, or the shielding gas composition; and control at least one of an output of power conversion circuitry based on the selected voltage, or a feed speed of a wire feeder based on the selected wire feed speed.

In some example interfaces, the first button, the second button, the third button, and the fourth button include at least one of hardware buttons or software buttons implemented on a display. Some example interfaces further include a display, and the control circuitry is configured to: in response to the input from the first button, output an indication of the welding process via the display; in response to an input from the second button, output an indication of the electrode wire type via the display; in response to an input from the third button, output an indication of the electrode wire size via the display; and in response to an input from the fourth button, output an indication of the shielding gas composition via the display.

In some examples, the control circuitry is configured to select the welding program in response to an input from a fifth button. In some examples, the control circuitry is configured to, in response to an input from the fifth button, display at least one of the selected welding process, the selected electrode wire type, the selected electrode wire size, the selected shielding gas composition, a material thickness, the selected voltage, or the selected wire feed speed. Some example welding equipment interfaces further include power conversion circuitry configured to convert input power to welding power based on the voltage, in which the control circuitry is configured to control the power conversion circuitry. Some example interfaces further include the wire feeder configured to feed an electrode wire based on the wire feed speed.

Some example welding equipment interfaces further include a second input device, in which the control circuitry is configured to modify the voltage based on an input to the second input device. Some examples further include an indicator configured to output an indication of whether the voltage is within a voltage range, higher than the voltage range, or lower than the voltage range, the control circuitry configured to determine the voltage range based on the wire feed speed selected via the second input device. Some example welding equipment interfaces further include a display, in which the control circuitry is configured to determine a material thickness corresponding to the wire feed speed selected via the first input device and to display the material thickness on the display.

Disclosed example welding-type power supplies include power conversion circuitry configured to convert input power to welding power based on an output voltage; a first button, a second button, a third button, and a fourth button; a first input device configured to adjust a wire feed speed; and control circuitry configured to: in response to an input from the first button, select the welding process of power conversion circuitry based on a sequence of welding processes; in response to an input from the second button, select the electrode wire type based on a sequence of electrode wire types; in response to an input from the third button, select the electrode wire size based on a sequence of electrode wire sizes; in response to an input from the fourth button, select the shielding gas composition from a sequence of shielding gas compositions; select a welding program based on the welding process, the electrode wire type, the electrode wire size, and the shielding gas composition; in response to input from the first input device, select a wire feed speed; based on the selected wire feed speed, select a voltage based on a relationship between the wire feed speed and the voltage, the relationship based on at least one of the selected welding process, the electrode wire type, the electrode wire size, or the shielding gas composition; and control at least one of an output of the power conversion circuitry based on the selected voltage, or a feed speed of a wire feeder based on the selected wire feed speed.

In some examples, the first button, the second button, the third button, and the fourth button include at least one of hardware buttons or software buttons implemented on a display. Some example power supplies further include a display, and the control circuitry is configured to: in response to the input from the first button, output an indication of the welding process via the display; in response to an input from the second button, output an indication of the electrode wire type via the display; in response to an input from the third button, output an indication of the electrode wire size via the display; and in response to an input from the fourth button, output an indication of the shielding gas composition via the display.

In some examples, the control circuitry is configured to select the welding program in response to an input from a fifth button. In some example power supplies, the control circuitry is configured to, in response to an input from the fifth button, display at least one of the selected welding process, the selected electrode wire type, the selected electrode wire size, the selected shielding gas composition, a material thickness, the selected voltage, or the selected wire feed speed. Some example power supplies further include the wire feeder, which is configured to feed an electrode wire based on the wire feed speed.

Some example power supplies further include a second input device, in which the control circuitry is configured to modify the voltage based on an input to the second input device. Some examples further include an indicator configured to output an indication of whether the voltage is within a voltage range, higher than the voltage range, or lower than the voltage range, in which the control circuitry is configured to determine the voltage range based on the wire feed speed selected via the first input device.

Disclosed example methods include: receiving, via a first button, a selection of a welding process from a sequence of welding processes; receiving, via a second button, a selection of an electrode wire type from a sequence of electrode wire types; receiving, via a third button, a selection of an electrode wire size from a sequence of electrode wire sizes; receiving, via a second button, a selection of a shielding gas composition from a sequence of shielding gas compositions; receiving, via an input device, a selection of a wire feed speed; based on the selected wire feed speed, selecting, via control circuitry, a voltage based on a relationship between the wire feed speed and the voltage, the relationship based on at least one of the selected welding process, the electrode wire type, the electrode wire size, or the shielding gas composition; and controlling, via the control circuitry, at least one of an output of power conversion circuitry based on the selected voltage, or a feed speed of a wire feeder based on the selected wire feed speed.

The present invention includes:
determining, via the control circuitry, a workpiece thickness corresponding to the selected wire feed speed in response to the selection of the wire feed speed; and displaying the workpiece thickness on a display device.

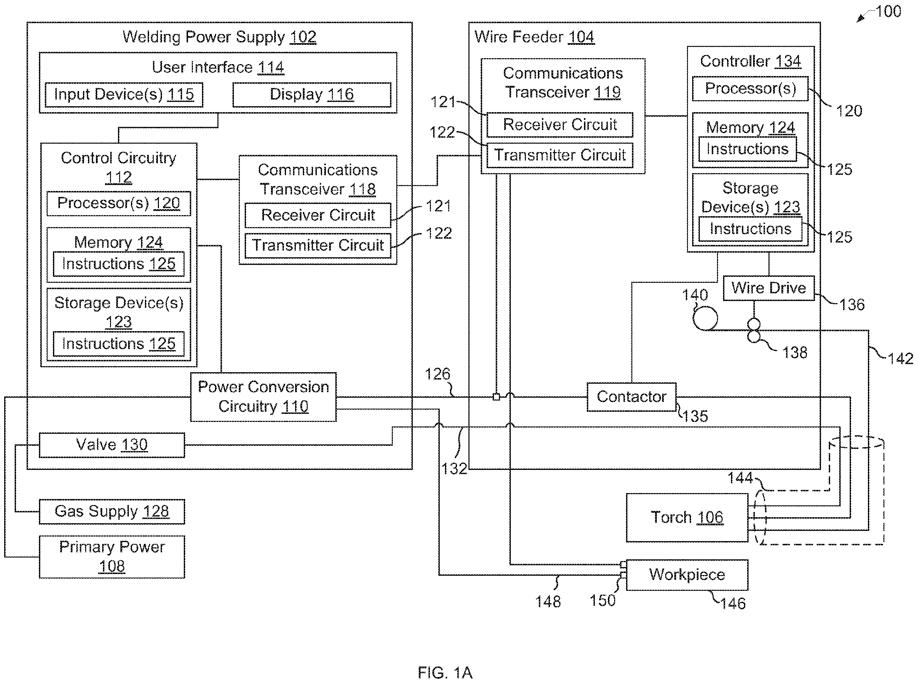

Turning now to the drawings, FIG. 1A is a block diagram of an example welding system 100 having a welding-type power supply 102, a wire feeder 104, and a welding torch 106. The welding system 100 powers, controls, and supplies consumables to a welding application. In some examples, the power supply 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the power supply 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example system 100 of FIG. 1A includes a wire feeder 104 (e.g., for GMAW or FCAW welding), the wire feeder 104 may be replaced by any other type of remote accessory device, such as a stick welding and/or TIG welding remote control interface that provides stick and/or TIG welding

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output, and a separate auxiliary converter 111 is provided to convert primary power to auxiliary power. In some other examples, the power supply 102 receives a converted auxiliary power output directly from a wall outlet. Any suitable power conversion system or mechanism may be employed by the power supply 102 to generate and supply both weld and auxiliary power.

The power supply 102 includes a control circuitry 112 to control the operation of the power supply 102. The power supply 102 also includes a user interface 114. The control circuitry 112 receives input from the user interface 114, through which a user may choose a process and/or input desired parameters (e.g., voltages, currents, particular pulsed or non-pulsed welding regimes, and so forth). The user interface 114 may receive inputs using one or more input devices 115, such as via a keypad, keyboard, physical buttons, a touch screen (e.g., software buttons), a voice activation system, a wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with other welding devices within the welding system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1A, the control circuitry 112 communicates with the wire feeder 104 via the weld circuit via a communications transceiver 118, as described below.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications transceiver 118 is communicatively coupled to the weld cable 126 to communicate (e.g., send/receive) data over the weld cable 126. The communications transceiver 118 may be implemented using serial communications (e.g., full-duplex RS-232 or RS-422, or half-duplex RS-485), network communications (e.g., Ethernet, PROFIBUS, IEEE 802.1X wireless communications, etc.), parallel communications, and/or any other type of communications techniques. In some examples, the communications transceiver 118 may implement communications over the weld cable 126.

The example communications transceiver 118 includes a receiver circuit 121 and a transmitter circuit 122. Generally, the receiver circuit 121 receives data transmitted by the wire feeder 104 via the weld cable 126 and the transmitter circuit 122 transmits data to the wire feeder 104 via the weld cable 126. The communications transceiver 118 enables remote configuration of the power supply 102 from the location of the wire feeder 104, and/or command and/or control of the wire feed speed output by the wire feeder 104 and/or the weld power (e.g., voltage, current) output by the power supply 102..

The example wire feeder 104 also includes a communications transceiver 119, which may be similar or identical in construction and/or function as the communications transceiver 118. While communication over a separate communications cable is illustrated in FIG. 1A, other communication media, such as wireless media, power line communications, and/or any other communications media, may be used.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the welding system 100 does not include the gas supply 128, the valve 130, and/or the cable 132.

In some examples, the wire feeder 104 uses the welding power to power the various components in the wire feeder 104, such as to power a wire feeder controller 134. As noted above, the weld cable 126 may be configured to provide or supply the welding power. The power supply 102 may also communicate with a communications transceiver 119 of the wire feeder 104 using the weld cable 126 and the communications transceiver 118 disposed within the power supply 102. In some examples, the communications transceiver 119 is substantially similar to the communications transceiver 118 of the power supply 102. The wire feeder controller 134 controls the operations of the wire feeder 104. In some examples, the wire feeder 104 uses the wire feeder controller 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder controller 134 and configured to enable or inhibit welding power to continue to flow to the weld cable 126 for the welding application. In some examples, the contactor 135 is an electromechanical device. However, the contactor 135 may be any other suitable device, such as a solid state device. The wire feeder 104 includes a wire drive 136 that receives control signals from the wire feeder controller 134 to drive rollers 138 that rotate to pull wire off a spool 140 of wire. The wire is provided to the welding application through a torch cable 142. Likewise, the wire feeder 104 may provide the shielding gas from the cable 132 through the cable 142. The electrode wire, the shield gas, and the power from the weld cable 126 are bundled together in a single torch cable 144 and/or individually provided to the welding torch 106. In some examples, the contactor 135 is omitted and power is initiated and stopped by the power supply 102.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 attachable and/or detachable from the power supply 102 for ease of replacement of the work cable 148. The work cable 148 may be terminated with a clamp 150 (or another power connecting device), which couples the power supply 102 to the workpiece 146.

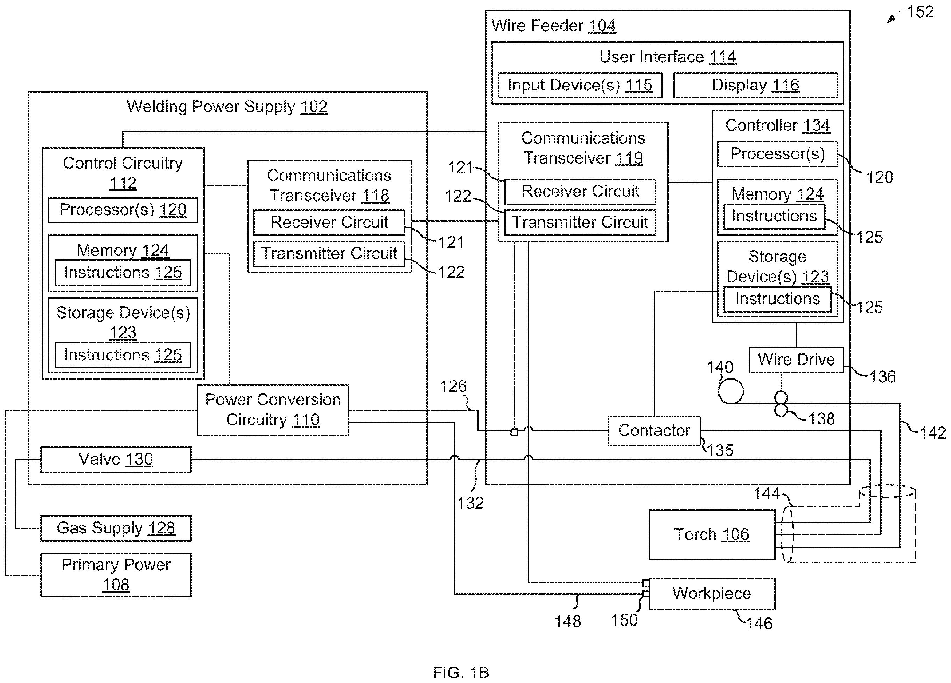

FIG. 1B is a schematic diagram of another example welding system 152 in which the wire feeder 104 includes the user interface 114 in addition or as an alternative to the user interface on the welding power supply 102. In the example of FIG. 1B, the control circuitry 134 of the wire feeder 104 implements the determinations of the welding program and welding parameters which are described with reference to the control circuitry 112 of FIG. 1A.

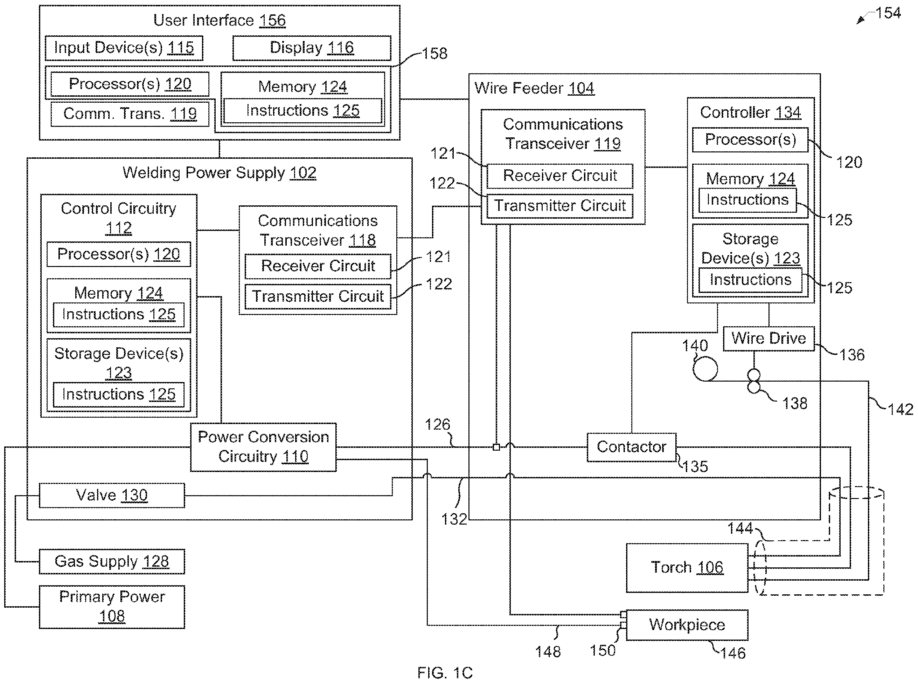

FIG. 1C is a schematic diagram of another example welding system 154 including a separate user interface 156. The user interface 156 is a separate device, and may be connected to the welding power supply 102 and/or to the wire feeder 104 to provide commands and/or control information. The example user interface 156 includes the input devices 115 and the display 116, and includes control circuitry 158. The example control circuitry 158 includes the processor(s) 120 and the memory 124 storing the instructions 125. The example user interface 156 further includes a communications transceiver 119 to enable communications between the user interface 156 and the welding power supply 102 and/or the wire feeder.

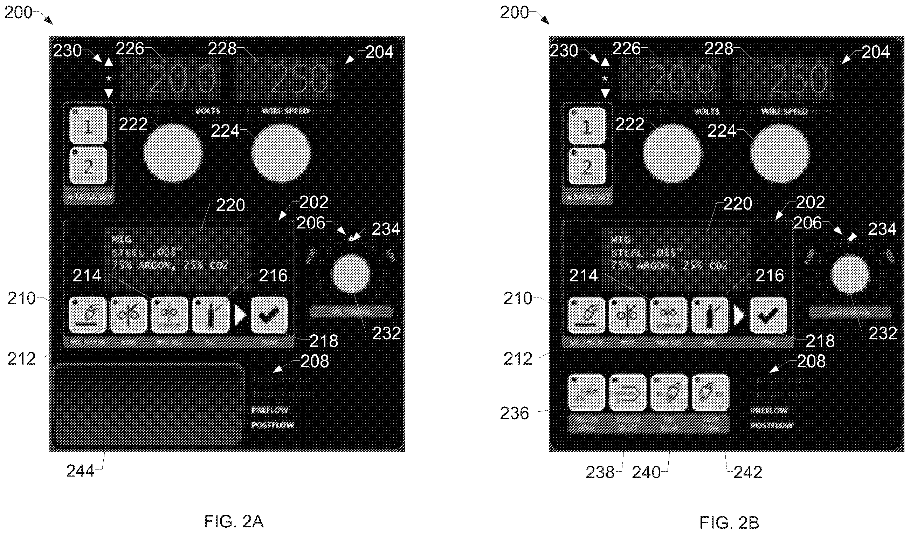

FIGS. 2A and 2B illustrate an example user interface 200 that may be used to implement the user interface 114 of FIG. 1A. The user interface 200 may also implement the user interface 114 of FIG. 1B and/or the user interface 156 of FIG. 1C The user interface 200 of FIG. 2A includes a weld process configuration portion 202, a weld parameter portion 204, and arc control portion 206, and a weld options portion 208. The user interface 200 may include more or fewer of the example portions 202-208 illustrated in FIG. 2A.

The weld process configuration portion 202 enables an operator to easily and intuitively set up (or configure) a type of weld process. The example weld process configuration portion 202 includes a weld process selection button 210, a wire type selection button 212, a wire size selection button 214, a gas type selection button 216, and a confirmation button 218. The example buttons 210-218 are shown and described as hardware buttons, but may be implemented using other types of input devices, such as software buttons executed on a touch screen or other display, switches, knobs, and/or any other type of input device.

The example control circuitry 112 of FIG. 1A configures a weld process based on the inputs to the buttons 210-218, and may use the collection of selected weld process, wire type, wire size, and/or gas type to load a weld program. Selection of each of the buttons 210-216 causes the control circuitry 112 to select a next parameter in a corresponding sequence of parameters for control of the weld process. In response to an input from the weld process selection button 210, the control circuitry 112 selects the welding process of the power conversion circuitry 110 based on a sequence of welding processes. For example, one press of the weld process selection button 210 causes the control circuitry 112 to select a first weld process in the sequence of weld processes, a second press of the weld process selection button 210 causes the control circuitry 112 to select a next (e.g., second) weld process in the sequence of weld processes, a third press of the weld process selection button 210 causes the control circuitry 112 to select a next (e.g., third) weld process in the sequence of weld processes, and so on. When a final weld process in the sequence is reached, another press of the weld process selection button 210 may cause the control circuitry 112 to cycle to the beginning of the sequence and select the first weld process in the sequence.

Similarly, in response to an input from the wire type selection button 212, the control circuitry 112 selects the electrode wire type based on a sequence of electrode wire types. In response to an input from the wire size selection button 214, the control circuitry 112 selects the electrode wire size based on a sequence of electrode wire sizes. In response to an input from the gas type selection button 216, the control circuitry 112 selects the shielding gas composition from a sequence of shielding gas compositions. In some cases, such as when a self-shielded wire type is selected as the wire type, the selected shielding gas may be "none," in which case shielding gas is not output during the weld.

To assist the operator in setting up the weld program, the example buttons 210-216 are arranged from left-to-right in an order that may be reflective of a tree structure in which the weld process, the wire type, the wire size, and the gas type are organized within the storage device(s) 123 and/or the memory 124 of FIG. 1A. For example, the contents of the wire type sequence may dependent on the selection of the weld process to ensure that an operator does not select a wire type that is incompatible (or poorly compatible) with a selected weld process. Similarly, the wire size sequence may be dependent on the selections of the weld process and wire type, and the gas type sequence may be dependent on the selections of the weld process, the wire type, and the wire size. Changing a weld process (e.g., via the weld process selection button 210) after a wire type has been selected may cause a change in the selected wire type due to the selected wire type being absent from the sequence of wire types associated with the later-selected weld process.

While the illustrated example order is demonstrably advantageous from a usability perspective, other orders may be used. In response to an input from any of the buttons 210-216, a display 220 of the user interface 200 may display the currently selected value of the sequence corresponding to the button 210-216. For example, in response to a selection of the weld process selection button 210, in addition to selecting the next weld process in the sequence of weld processes, the display 220 displays the selected weld process. Similarly, the display 220 may display values in response to selections of the wire type selection button 212, the wire size selection button 214, and the gas type selection button 216. Additionally or alternatively, the buttons 210-216 may include indicators (e.g., lights) to indicate the parameter represented by the value on the display 220.

In some examples, a first press of one of the buttons (e.g., the weld process selection button 210), while a parameter associated with another of the buttons (e.g., the wire size selection button 214) is shown on the display 220, causes the control circuitry 112 to change to displaying the weld parameter associated with the pressed button (e.g., the weld selected process) without selecting the next value in the sequence. Subsequent presses of the same button (e.g., the weld process selection button 210) may then cause the control circuitry 112 to select the next parameter (e.g., weld process) in the corresponding sequence.

The confirmation button 218 enables an operator to confirm a selection (e.g., the weld process, the wire type, the wire size, and the gas type) and/or to select a welding program in response to an input from the confirmation button 218. For example, when one of the buttons 210-214 is the last button selected by the operator (e.g., the value is displayed on the display 220), the confirmation button 218 may confirm the selected value and move the operators attention to the next input or button in the order (e.g., from the weld process selection button 210 to the wire type selection button 212). When the last button in the order is selected, the confirmation button 218 causes the control circuitry 112 to select a welding program based on the welding process, the electrode wire type, the electrode wire size, and the shielding gas composition.

The example weld parameter portion 204 of the user interface 200 includes a voltage adjustment knob 222, a wire feed speed adjustment knob 224, a voltage display 226, a wire feed speed display 228, and a voltage range indicator 230. The example voltage adjustment knob 222 enables adjustment of the voltage output by the power conversion circuitry 110. The wire feed speed adjustment knob 224 enables adjustment of wire feed speed output by the wire feeder 104. The voltage display 226 displays the current value of the voltage setpoint and the wire feed speed display 228 displays the current value of the wire feed speed setpoint.

The example control circuitry 112 implements a synergic mode, in which the control circuitry 112 determines a voltage setpoint in response to a wire feed speed setpoint selected via the wire feed speed adjustment knob 224 and a predetermined relationship between the wire feed speed and the voltage. In some examples, the predetermined relationship is selected based on the weld program.

When the control circuitry 112 implements the synergic mode, the control circuitry 112 determines a workpiece or material thickness that is recommended for the currently-selected wire feed speed and/or weld program. For example, a range of wire feed speeds may be stored in the storage device(s) 123 and/or the memory 124 as suitable for a particular weld program and wire feed speed.

The operator may, after the voltage is set in response to a selected wire feed speed in synergic mode, adjust the voltage via the voltage adjustment knob 222. Based on a range of voltages corresponding to the wire feed speed (based on the synergic relationship), the voltage range indicator 230 outputs an indication of whether the selected voltage is within the range of voltages (e.g., a star or other non-directional indicator), above the range of voltages (e.g., an upward arrow or other directional indicator), or below the range of voltages (e.g., a downward arrow or other directional indicator). The voltage range indicator 230 enables an operator who wishes to adjust the voltage to know where the selected voltage is relative to the "preferred" voltage range corresponding to the selected wire feed speed.

The arc control portion 206 includes an arc control knob 232 and an arc control indicator 234. The arc control knob 232 enables the operator to adjust the feel of the arc within a range between stiffer and more fluid. The example arc control knob 232 may be implemented using an encoder to determine the position of the arc control knob 232, which enables rapid recall and setting of prior values of the arc control parameter. The example control circuitry 112 may adjust an inductance parameter of the power conversion circuitry 110 in response to adjustment of the arc control knob 232. The example arc control indicator 234 includes a set of LEDs that are arranged around the arc control knob 232 between a center position and each of a "stiff' position and a "fluid" position on opposite sides of the center position.

The LEDs indicate the selected value of the arc control parameter by incrementally illuminating from the center position toward the "stiff' position or the "fluid" position. For example, when the arc control knob 232 is in the center position, no LEDs are illuminated. As the operator turns the arc control knob 232 toward the "stiff' position, the LEDs are illuminated, one at a time as the arc control knob 232 approaches the "stiff' position, starting with the LED closest to the center position. If the operator then turns the arc control knob 232 toward the "fluid" position, the LEDs are turned off, one at a time as the arc control knob 232 approaches the center position, until the LED closest to the center position is turned off last. As the arc control knob 232 passes the center position toward the "fluid" position, the LEDs on the fluid side of the arc control knob 232 are illuminated one at a time, starting with the LED closest to the center position.

As illustrated in FIG. 2B, the weld options portion 208 includes a trigger hold button 236, a trigger select button 238, a pre-flow button 240, and a post flow button 242. The example buttons 236-242 may be selected to enable adjustment of corresponding parameters, such as via any of the knobs 222, 224, 232 discussed above.

The trigger hold button 236, when enabled, permits an operator to continue to weld without continuing to push on a trigger of the weld torch. The trigger select button 238, when enabled, permits an operator to quickly switch between weld schedules (e.g., weld programs and/or parameters saved in memory) by pressing the trigger of the weld torch.

The pre-flow button 240, when enabled, provides a duration of gas flow prior to beginning wire feeding and power output to the wire. Selection of the pre-flow button 240 may enable the operator to adjust the duration of the pre-flow gas. The post-flow button 242, when enabled, provides a duration of gas flow at the end of wire feeding and power output to the wire (e.g., after the operator has released the trigger). Selection of the post-flow button 242 may enable the operator to adjust the duration of the post-flow gas.

Because the buttons 236-242 are infrequently manipulated, the buttons 236-242 may be covered as illustrated in FIG. 2A. A removable cover 244 enables access or covering of the buttons 236-242, as desired by the operator.

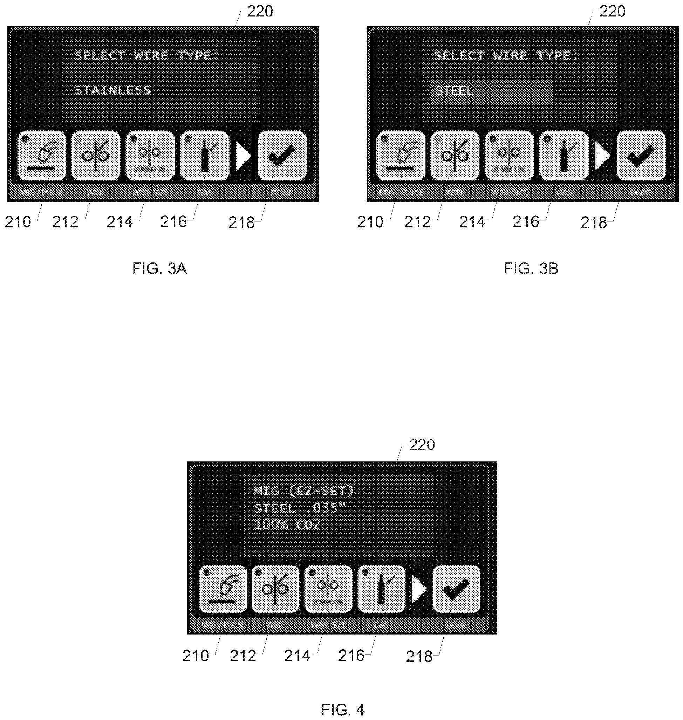

FIGS. 3A and 3B illustrate the example buttons 210-218 and the display device 220 of the user interface 200 of FIGS. 2A and 2B for setting up a welding process. In FIG. 3A, the display device 220 displays a selected wire type (e.g., stainless), such as in response to selection of the wire type selection button 212. The wire type selection button 212 also includes an illuminator that indicators that the wire type selection button 212 is active. In response to a subsequent selection of the wire type selection button 212, a next wire type (e.g., steel wire) in the sequence of wire types is selected by the control circuitry 112 and displayed on the display 220, as illustrated in FIG. 3B.

FIG. 4 illustrate the example buttons 210-218 and the display device 220 of the user interface 200 of FIGS. 2A and 2B when the weld program has been loaded. For example, in response to selection of the confirmation button 218, the control circuitry 112 loads a weld program based on the selected weld process (e.g., MIG EZ-SET), wire type (e.g., STEEL), wire size (e.g., 0.889 mm (0.035")), and gas type (e.g., 100% CO2), and display the selected weld process, wire type, wire size, and/or gas type, the material thickness, the selected voltage, and/or the selected wire feed speed on the display 220.

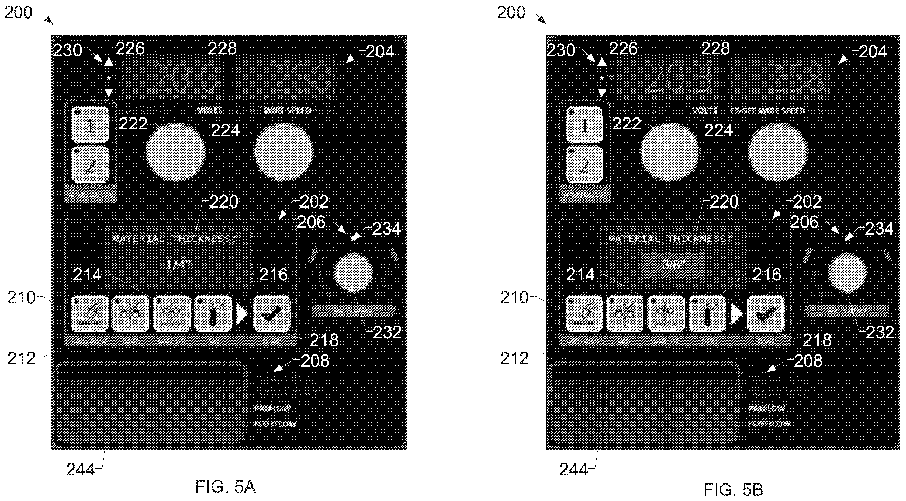

FIGS. 5A and 5B illustrates the example user interface 200 of FIGS. 2A and 2B for synergically adjusting voltage and wire feed speed. In the example of FIG. 5A, a wire feed speed of 6350 mm/min (250 inches per minute (ipm)) has been selected (e.g., via the wire feed speed adjustment knob 224, via the control circuitry 112, etc.) and is displayed on the wire feed speed display 228. Based on the selected wire feed speed (e.g., 6350 mm/min (250 ipm)), the control circuitry 112 determines the corresponding voltage based on a relationship between the wire feed speed and the voltage, which may be stored (e.g., in the storage device(s) 123, in the memory 124, etc.) in associated with the weld program and/or one or more of the weld process parameter, the wire type parameter, the wire size parameter, or the gas type parameter. The control circuitry 112 sets the voltage setpoint determined based on the relationship.

In addition to setting the voltage and according to the present invention, the control circuitry 112 calculates a recommended material thickness corresponding to the selected wire feed speed, and displays the material thickness on the display 220. In addition to the wire feed speed, the control circuitry 112 may determine the material thickness based on the weld process parameter, the wire type parameter, the wire size parameter, and/or the gas type parameter. As illustrated in FIG. 5A, a first wire feed speed (e.g., 6350 mm/min (250 ipm)) results in a first voltage setpoint (e.g., 20.0V) and a first material thickness (e.g., 6.35 mm (¼")). As illustrated in FIG. 5B, changing the wire feed speed to a second wire feed speed (e.g., 6553 mm/min (258 ipm)) results in a second voltage setpoint (e.g., 20.3V) and a second material thickness (e.g., 9.525 mm (3/8")).

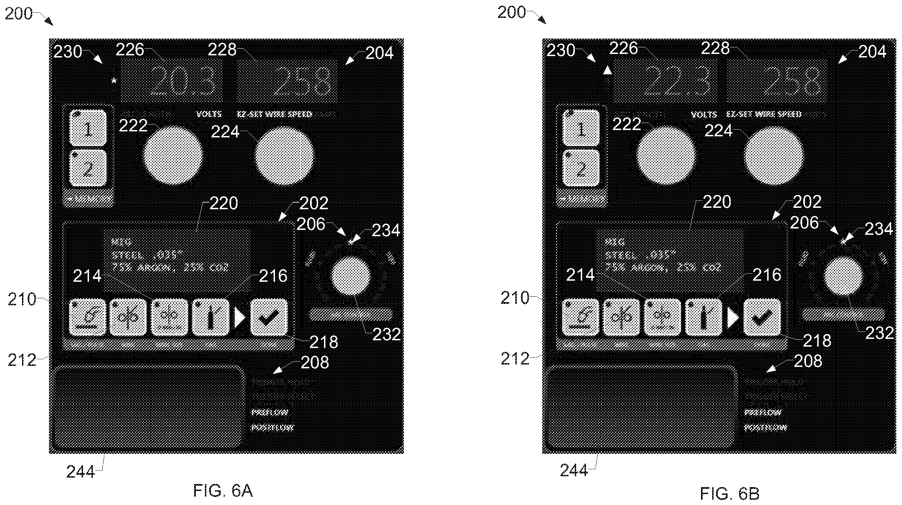

FIGS. 6A and 6B illustrates the example user interface of FIGS. 2A and 2B for adjusting voltage. While the control circuitry 112 calculates and sets a voltage based on the selected wire feed speed, an operator may override the calculated voltage by adjusting the voltage via the voltage adjustment knob 222. As illustrated in FIG. 6A, when the voltage corresponds to the voltage calculated by the control circuitry 112 based on the wire feed speed, or is within a range of voltages calculated by the control circuitry 112, the voltage range indicator 230 displays a first, non-directional indicator. In the example of FIG. 6A, the first, non-directional indicator is a star-shaped light, but may be any other shape.

As illustrated in FIG. 6B, when the operator adjusts the voltage to a second voltage (e.g., 22.3V) via the voltage adjustment knob 222, the control circuitry 112 determines whether the voltage is within the range of voltages corresponding to the wire feed speed, is higher than the range, or lower than the range. In the example of FIG. 6B, the voltage (e.g., 22.3V) is higher than the range of voltages. In response to determining that the set voltage is higher than the determined range of voltages, the voltage range indicator 230 displays a second, directional indicator. In the example of FIG. 6B, the second, directional indicator is an upwardly pointed arrow, but may be any other shape. Conversely, in response to determining that the set voltage is lower than the determined range of voltages, the voltage range indicator 230 displays a third, directional indicator, such as a downwardly pointed arrow or another shape.

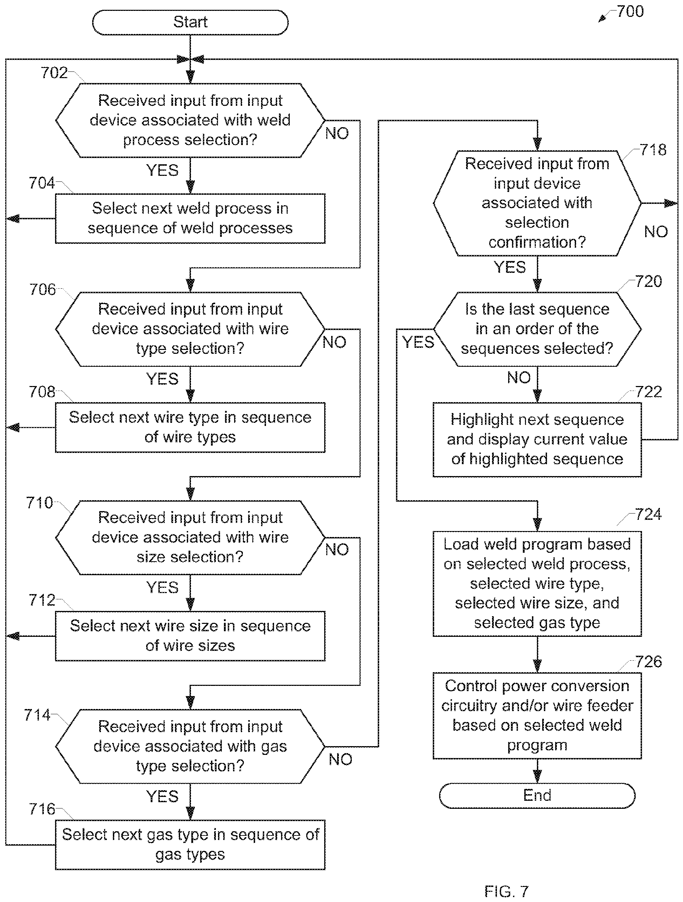

FIG. 7 is a flowchart representative of example machine readable instructions 700 which may be executed by the example welding power supply 102 of FIG. 1A to set up a welding process using a user interface. The example instructions 700 may be stored in the storage device(s) 123 and/or the memory 124 and executed by the processor(s) 120 of the control circuitry 112. The example instructions 700 are described below with reference to the example user interface 200 of FIGS. 2A and 2B.

At block 702, the control circuitry 112 determines whether an input has been received from an input device associated with weld process selection (e.g., the weld process selection button 210). For example, the weld process selection button 210 or another type of input device may be pushed or otherwise actuated by an operator. If an input has been received from the input device associated with weld process selection (block 702), at block 704 the control circuitry 112 selects a next weld process in a sequence of weld processes.

If an input has not been received from the input device associated with weld process selection (block 702), at block 706 the control circuitry 112 determines whether an input has been received from an input device associated with wire type selection (e.g., the wire type selection button 212). For example, the wire type selection button 212 or another type of input device may be pushed or otherwise actuated by an operator. If an input has been received from an input device associated with wire type selection (block 706), at block 708 the control circuitry 112 selects a next wire type in a sequence of wire types. The wire type sequence may be determined based on the selected weld process.

If an input has not been received from the input device associated with wire type selection (block 706), at block 710 the control circuitry 112 determines whether an input has been received from an input device associated with wire size selection (e.g., the wire size selection button 214). For example, the wire size selection button 214 or another type of input device may be pushed or otherwise actuated by an operator. If an input has been received from an input device associated with wire size selection (block 710), at block 712 the control circuitry 112 selects a next wire size in a sequence of wire sizes. The wire size sequence may be determined based on the selected weld process and/or the selected wire type.

If an input has not been received from the input device associated with wire type selection (block 710) at block 714 the control circuitry 112 determines whether an input has been received from an input device associated with gas type selection (e.g., the gas type selection button 216). For example, the gas type selection button 216 or another type of input device may be pushed or otherwise actuated by an operator. If an input has been received from an input device associated with wire size selection (block 714), at block 716 the control circuitry 112 selects a next gas type in a sequence of gas types. The gas type sequence may be determined based on the selected weld process, the selected wire type, and/or the selected wire size.

If an input has not been received from the input device associated with wire type selection (block 714), at block 718, the control circuitry 112 determines whether an input has been received from an input device associated with selection confirmation (e.g., the confirmation button 218). For example, the confirmation button 218 or another type of input device may be pushed or otherwise actuated by an operator. If an input has been received from an input device associated with selection confirmation (block 718), at block 720 the control circuitry 112 determines whether the last sequence in an order of the sequences is selected. For example, the sequences are hierarchically ordered as the weld process sequence, the wire type sequence, the wire size sequence, and the gas type sequence. In such an order, the control circuitry 112 determines whether the gas type sequence was most recently selected.

After selecting the next weld process (block 704), after selecting the next wire type (block 708), after selecting the next wire size (block 712), or after selecting the next gas type (block 716), control returns to block 702.

If the last sequence in the order of the sequences is not selected (block 720), at block 722 the control circuitry 112 highlights a next sequence and displays a current value of the highlighted sequence (e.g., on the display 220). For example, if the weld process sequence was most recently selected, the control circuitry 112 selects the wire type sequence in response to selection of the confirmation button 218. After highlighting the next sequence (block 722), or if an input has not been received from the input device associated with selection confirmation (block 718), control returns to block 702.

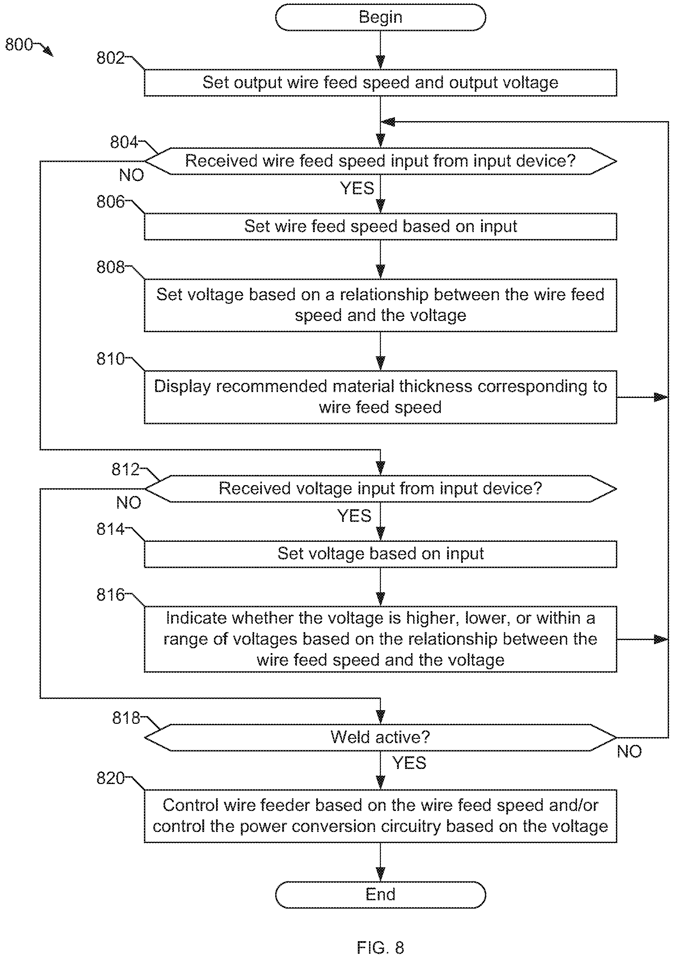

If the last sequence in the order of the sequences is selected (block 720), at block 724 the control circuitry 112 loads a weld program based on the selected weld process, the selected wire type, the selected wire size, and the selected gas type. At block 726, the control circuitry 112 controls the power conversion circuitry 110 and/or the wire feeder 104 based on the selected weld program. For example, the control circuitry 112 may control the power conversion circuitry 110 and/or the wire feeder 104 to perform one or more weld operations according to the selected weld program and one or more specified weld parameters. Example instructions to implement block 726 are described below with reference to FIG. 8.

After controlling the power conversion circuitry 110 and/or the wire feeder 104, the example instructions 700 end.

FIG. 8 is a flowchart representative of example machine readable instructions 800 which may be executed by the example welding power supply 102 of FIG. 1A to control the power conversion circuitry 110 and/or the wire feeder 104 based on a welding process. The example instructions 800 may be stored in the storage device(s) 123 and/or the memory 124 and executed by the processor(s) 120 of the control circuitry 112 to implement block 726 of FIG. 7. The example instructions 800 are described below with reference to the example user interface 200 of FIGS. 2A and 2B.

At block 802, the control circuitry 112 sets an output wire feed speed and an output voltage. For example, the control circuitry 112 may set the output wire feed speed and the output voltage based on a most recently-used output wire feed speed and output voltage for a selected weld program.

At block 804, the control circuitry 112 determines whether a wire feed speed input has been received from an input device (e.g., the wire feed speed adjustment knob 224 of FIG. 2A). If a wire feed speed input has been received (block 804), at block 806 the control circuitry 112 sets a wire feed speed based on the input.

At block 808, the control circuitry 112 determines and sets a voltage based on a relationship between the wire feed speed and the voltage.

At block 810, the control circuitry 112 determines and displays a recommended material thickness corresponding to the wire feed speed. The relationship between the wire feed speed the voltage and/or the recommended material thickness may be based on the weld program and/or one or more of the weld process, the wire type, the wire size, and/or the gas type. After displaying the recommended material thickness (block 810), control returns to block 804.

If a wire feed speed input has not been received (block 804), at block 812 the control circuitry 112 determines whether a voltage input has been received from an input device (e.g., the voltage adjustment knob 222). If a voltage input has been received (block 812), at block 814 the control circuitry 112 sets a voltage based on the voltage input.

At block 816, the control circuitry 112 indicates (e.g., via the voltage range indicator 230) whether the voltage is higher, lower, or within a range of voltages based on the relationship between the wire feed speed and the voltage. After indicating whether the voltage is higher, lower, or within the range of voltages (block 816), control returns to block 804.

If a voltage input has not been received (block 812), at block 818 the control circuitry determines whether a weld is active. For example, the control circuitry 112 may determine whether a trigger on the weld torch has been depressed. If a weld is active (block 818), at block 820 the control circuitry 112 controls the wire feeder 104 based on the wire feed speed and/or controls the power conversion circuitry 110 based on the voltage. The control circuitry 112 may control the power conversion circuitry 110 and/or the wire feeder 104 directly (e.g., via controlling switching elements of the power conversion circuitry 110 and/or controlling current to the wire drive 136) and/or indirectly (e.g., by supplying commands the power conversion circuitry 110 to implement the voltage and/or to the wire feeder 104 to implement the wire feed speed).

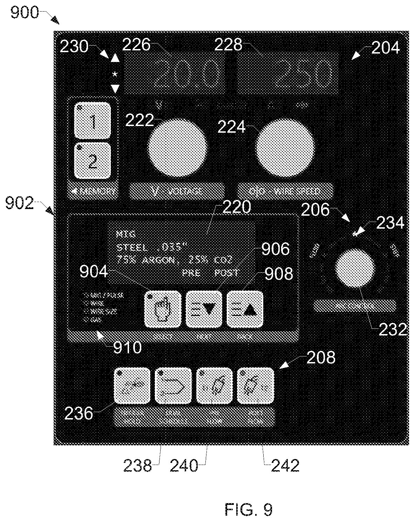

FIG. 9 illustrates a user interface 900 not covered by the present invention, and that may be used to implement the example user interface 114 of FIG. 1A. The user interface 900 of FIG. 9 is similar to the user interface 200 of FIG. 2A. However, unlike the weld process configuration portion 202 of FIG. 2A, the user interface 900 includes a weld process configuration portion 902 that includes a different set of buttons, including a selection button 904, a parameter sequence forward navigation button 906, and a parameter sequence backward navigation button 908. As in the user interface 200, the weld process configuration portion 902 uses sequences of parameters for each of the weld process, the wire type, the wire size, and the shield gas composition. A parameter indicator 910 may light up to indicate which of the parameters is currently being sequenced.

In response to a selection of the parameter sequence forward navigation button 906, the control circuitry 112 identifies a next value in the sequence of values for a selected weld parameter. If the current value is a "final" value in the sequence, the control circuitry 112 may select the first value in the sequence as the next value, and/or may display one or more menu items (e.g., go back one parameter). The control circuitry 112 may also display the identified value on the display 220.

Conversely, in response to a selection of the parameter sequence backward navigation button 908, the control circuitry 112 identifies a previous value in the sequence of values for a selected weld parameter. If the current value is a "first" value in the sequence, the control circuitry 112 may select the last value in the sequence as the next value, and/or may display one or more menu items (e.g., go back one parameter). The control circuitry 112 may also display the identified value on the display 220.

In response to a selection of the selection button 904, the control circuitry 112 selects the current value as the selected value for the selected parameter. If the control circuitry 112 is not on the final parameter, the control circuitry 112 proceeds to the next parameter to be selected. If the control circuitry 112 has selected the final parameter, the example control circuitry 112 may proceed to select a weld program based on the selected parameters.

The example buttons 904-908 and/or the indicators 910 may be implemented using hardware components and/or a combination of hardware and software (e.g., a touchscreen with software-implemented inputs). In other examples, the selection button 904, the parameter sequence forward navigation button 906, and the parameter sequence backward navigation button 908 may be replaced with a knob. The knob may be pushed to implement the functions of the selection button 904, and turned in either direction to implement the parameter sequence forward navigation button 906 and the parameter sequence backward navigation button 908.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

The control circuitry 112 may identify welding conditions of a given weld and automatically find the optimum value of rate of current rise for the welding conditions. An example control circuit implementation may be an Atmel Mega16 microcontroller, a STM32F407 microcontroller, a field programmable logic circuit and/or any other control or logic circuit capable of executing instructions that executes weld control software. The control circuit could also be implemented in analog circuits and/or a combination of digital and analog circuitry. Examples are described herein with reference to an engine-driven stick welder, but may be used or modified for use in any type of high frequency switching power source.

While the present invention has been described with reference to certain implementations, it will be understood by those skilled in the art that various changes may be made and equivalents may be substituted without departing from the scope of the present invention as defined in the appended claims.

## Claims

1. A welding equipment interface (114, 156, 200), comprising:
a first button (210), a second button (212), a third button (214), and a fourth button (216);
a first input device (115) configured to adjust a wire feed speed;
a display (116, 220);
being **characterised by**:
control circuitry (112) configured to:
in response to an input from the first button (210), select a welding process of power conversion circuitry based on a sequence of welding processes;
in response to an input from the second button (212), select an electrode wire type based on a sequence of electrode wire types;
in response to an input from the third button (214), select an electrode wire size based on a sequence of electrode wire sizes;
in response to an input from the fourth button (216), select a shielding gas composition from a sequence of shielding gas compositions;
select a welding program based on the welding process, the electrode wire type, the electrode wire size, and the shielding gas composition;
in response to input from the first input device (115), select a wire feed speed;
based on the selected wire feed speed, automatically select a voltage based on a relationship between the wire feed speed and the voltage, the relationship based on at least one of the selected welding process, the electrode wire type, the electrode wire size, or the shielding gas composition; and
control at least one of an output of power conversion circuitry (110) based on the selected voltage, or a feed speed of a wire feeder based on the selected wire feed speed,
wherein the control circuitry (112) is further configured to determine a material thickness corresponding to the wire feed speed selected via the first input device (115) and to display the material thickness on the display (116, 220).

2. The welding equipment interface (114. 156. 200) as defined in claim 1, wherein the first button (210), the second button (212), the third button (214), and the fourth button (216) comprise at least one of hardware buttons or software buttons implemented on a display.

3. The welding equipment interface (114, 156, 200) as defined in claim 1, wherein the control circuitry (112) is further configured to
in response to the input from the first button (210), output an indication of the welding process via the display (116, 220);
in response to an input from the second button (212), output an indication of the electrode wire type via the display (116, 220);
in response to an input from the third button (214), output an indication of the electrode wire size via the display (116, 220); and
in response to an input from the fourth button (216), output an indication of the shielding gas composition via the display (116, 220).

4. The welding equipment interface (114, 156, 200) as defined in claim 1, wherein the control circuitry (112) is configured to select the welding program in response to an input from a fifth button (218).

5. The welding equipment interface (114, 156, 200) as defined in claim 4, wherein the control circuitry (112) is configured to, in response to an input from the fifth button (218), display at least one of the selected welding process, the selected electrode wire type, the selected electrode wire size, the selected shielding gas composition, the material thickness, the selected voltage, or the selected wire feed speed.

6. The welding equipment interface (114, 156, 200) as defined in claim 1, further comprising power conversion circuitry (110) configured to convert input power to welding power based on the voltage, the control circuitry (112) configured to control the power conversion circuitry (110).

7. The welding equipment interface (114, 156, 200) as defined in claim 1, further comprising the wire feeder (104) configured to feed an electrode wire based on the wire feed speed.

8. The welding equipment interface (114, 156, 200) as defined in claim 1, further comprising a second input device (222), the control circuitry (112) configured to modify the voltage based on an input to the second input device (222).

9. The welding equipment interface (114, 156, 200) as defined in claim 8, further comprising an indicator (230) configured to output an indication of whether the voltage is within a voltage range, higher than the voltage range, or lower than the voltage range, the control circuitry (112) configured to determine the voltage range based on the wire feed speed selected via the second input device (222).

10. A welding-type power supply (102), comprising:
power conversion circuitry (110) configured to convert input power to welding power based on an output voltage;
being **characterised by**:
a welding equipment interface (114, 156, 200) according to any previous claim.

11. A method, comprising:
receiving, via a first button (210), a selection of a welding process from a sequence of welding processes;
receiving, via a second button (212), a selection of an electrode wire type from a sequence of electrode wire types;
receiving, via a third button (214), a selection of an electrode wire size from a sequence of electrode wire sizes;
receiving, via a fourth button (216), a selection of a shielding gas composition from a sequence of shielding gas compositions;
receiving, via an input device (115), a selection of a wire feed speed;
based on the selected wire feed speed, selecting, via control circuitry (112), a voltage based on a relationship between the wire feed speed and the voltage, the relationship based on at least one of the selected welding process, the electrode wire type, the electrode wire size, or the shielding gas composition; and
controlling, via the control circuitry (112), at least one of an output of power conversion circuitry (110) based on the selected voltage, or a feed speed of a wire feeder based on the selected wire feed speed.
**characterised in that** the method further comprises:
determining, via the control circuitry (112), a workpiece thickness corresponding to the selected wire feed speed in response to the selection of the wire feed speed; and
displaying the workpiece thickness on a display device (116, 220).

## Patentansprüche

1. Schweißgeräteschnittstelle (114, 156, 200), aufweisend:
eine erste Taste (210), eine zweite Taste (212), eine dritte Taste (214) und eine vierte Taste (216);
eine erste Eingabevorrichtung (115), die so konfiguriert ist, dass sie eine Drahtvorschubgeschwindigkeit anpasst;
eine Anzeige (116, 220);
**gekennzeichnet durch**:
eine Steuerschaltung (112), die konfiguriert ist zum:
als Reaktion auf eine Eingabe von der ersten Taste (210) Auswählen eines Schweißprozesses einer Leistungsumwandlungsschaltung basierend auf einer Sequenz von Schweißprozessen;
als Reaktion auf eine Eingabe von der zweiten Taste (212) Auswählen eines Elektrodendrahttyps basierend auf einer Sequenz von Elektrodendrahttypen;
als Reaktion auf eine Eingabe von der dritten Taste (214) Auswählen einer Elektrodendrahtgröße basierend auf einer Sequenz von Elektrodendrahtgrößen;
als Reaktion auf eine Eingabe von der vierten Taste (216) Auswählen einer Schutzgaszusammensetzung aus einer Sequenz von Schutzgaszusammensetzungen;
Auswählen eines Schweißprogramms basierend auf dem Schweißprozess, dem Elektrodendrahttyp, der Elektrodendrahtgröße und der Schutzgaszusammensetzung;
als Reaktion auf eine Eingabe von dem ersten Eingabegerät (115) Auswählen einer Drahtvorschubgeschwindigkeit;
basierend auf der ausgewählten Drahtvorschubgeschwindigkeit automatischen Auswählen einer Spannung basierend auf einer Beziehung zwischen der Drahtvorschubgeschwindigkeit und der Spannung, wobei die Beziehung basierend auf zumindest einem des ausgewählten Schweißprozesses, des Elektrodendrahttyps, der Elektrodendrahtgröße oder der Schutzgaszusammensetzung ausgewählt wird; und
Steuern zumindest eines von einem Ausgang einer Leistungsumwandlungsschaltung (110) basierend auf der ausgewählten Spannung oder einer Vorschubgeschwindigkeit eines Drahtvorschubs basierend auf der ausgewählten Drahtvorschubgeschwindigkeit, wobei die Steuerschaltung (112) ferner konfiguriert ist, eine Materialdicke entsprechend der über die erste Eingabevorrichtung (115) gewählten Drahtvorschubgeschwindigkeit zu bestimmen und die Materialdicke auf dem Display (116, 220) anzuzeigen.

2. Schweißgeräteschnittstelle (114, 156, 200) nach Anspruch 1, wobei die erste Taste (210), die zweite Taste (212), die dritte Taste (214) und die vierte Taste (216) zumindest eines von Hardware-Tasten oder Software-Tasten aufweisen, die auf einer Anzeige implementiert sind.

3. Schweißgeräteschnittstelle (114, 156, 200) nach Anspruch 1, wobei die Steuerschaltung (112) ferner konfiguriert ist zum:
als Reaktion auf die Eingabe von der ersten Taste (210) Ausgeben einer Angabe des Schweißprozesses über die Anzeige (116, 220) ;
als Reaktion auf eine Eingabe von der zweiten Taste (212) Ausgeben einer Angabe des Elektrodendrahttyps über die Anzeige (116, 220);
als Reaktion auf eine Eingabe von der dritten Taste (214) Ausgeben einer Angabe der Elektrodendrahtgröße über die Anzeige (116, 220); und
als Reaktion auf eine Eingabe von der vierten Taste (216) Ausgeben einer Angabe der Schutzgaszusammensetzung über die Anzeige (116, 220).

4. Schweißgeräteschnittstelle (114, 156, 200) nach Anspruch 1, wobei die Steuerschaltung (112) so konfiguriert ist, dass sie das Schweißprogramm als Reaktion auf eine Eingabe von einer fünften Taste (218) auswählt.

5. Schweißgeräteschnittstelle (114, 156, 200) nach Anspruch 4, wobei die Steuerschaltung (112) so konfiguriert ist, dass sie als Reaktion auf eine Eingabe von der fünften Taste (218) zumindest eines des ausgewählten Schweißverfahrens, des ausgewählten Elektrodendrahttyps, der ausgewählten Elektrodendrahtgröße, der ausgewählten Schutzgaszusammensetzung, der Materialdicke, der ausgewählten Spannung oder der ausgewählten Drahtvorschubgeschwindigkeit anzeigt.

6. Schweißgeräteschnittstelle (114, 156, 200) nach Anspruch 1, die ferner eine Leistungsumwandlungsschaltung (110) aufweist, die so konfiguriert ist, dass sie die Eingangsleistung basierend auf der Spannung in die Schweißleistung umwandelt, wobei die Steuerschaltung (112) so konfiguriert ist, dass sie die Leistungsumwandlungsschaltung (110) steuert.

7. Schweißgeräteschnittstelle (114, 156, 200) nach Anspruch 1, die ferner den Drahtvorschub (104) aufweist, der so konfiguriert ist, dass er einen Elektrodendraht basierend auf der Drahtvorschubgeschwindigkeit zuführt.

8. Schweißgeräteschnittstelle (114, 156, 200) nach Anspruch 1, die ferner eine zweite Eingabevorrichtung (222) aufweist, wobei die Steuerschaltung (112) so konfiguriert ist, dass sie die Spannung basierend auf einer Eingabe in die zweite Eingabevorrichtung (222) modifiziert.

9. Schweißgeräteschnittstelle (114, 156, 200) nach Anspruch 8, die ferner einen Indikator (230) aufweist, der so konfiguriert ist, dass er eine Angabe ausgibt, ob die Spannung innerhalb eines Spannungsbereichs liegt, höher als der Spannungsbereich ist oder niedriger als der Spannungsbereich ist, wobei die Steuerschaltung (112) so konfiguriert ist, dass sie den Spannungsbereich basierend auf der Drahtvorschubgeschwindigkeit bestimmt, die über die zweite Eingabevorrichtung (222) ausgewählt wird.

10. Schweißstromversorgung (102), aufweisend:
eine Leistungsumwandlungsschaltung (110), die so konfiguriert ist, dass sie Eingangsleistung basierend auf einer Ausgangsspannung in Schweißleistung umwandelt;
**gekennzeichnet durch**:
eine Schweißgeräteschnittstelle (114, 156, 200) nach einem der vorhergehenden Ansprüche.

11. Verfahren, aufweisend:
Empfangen einer Auswahl eines Schweißprozesses aus einer Sequenz von Schweißprozessen über eine erste Taste (210);
Empfangen einer Auswahl eines Elektrodendrahttyps aus einer Sequenz von Elektrodendrahttypen über eine zweite Taste (212);
Empfangen einer Auswahl einer Elektrodendrahtgröße aus einer Sequenz von Elektrodendrahtgrößen über eine dritte Taste (214);
Empfangen einer Auswahl einer Schutzgaszusammensetzung aus einer Sequenz von Schutzgaszusammensetzungen über eine vierte Taste (216);
Empfangen einer Auswahl einer Drahtvorschubgeschwindigkeit über eine Eingabevorrichtung (115);
basierend auf der ausgewählten Drahtvorschubgeschwindigkeit Auswählen einer Spannung basierend auf einer Beziehung zwischen der Drahtvorschubgeschwindigkeit und der Spannung über die Steuerschaltung (112), wobei die Beziehung basierend auf zumindest einem des ausgewählten Schweißprozesses, des Elektrodendrahttyps, der Elektrodendrahtgröße oder der Schutzgaszusammensetzung ausgewählt wird; und
Steuern zumindest eines von einem Ausgang der Leistungsumwandlungsschaltung (110) basierend auf der ausgewählten Spannung oder einer Vorschubgeschwindigkeit eines Drahtvorschubs basierend auf der ausgewählten Drahtvorschubgeschwindigkeit über die Steuerschaltung (112).
**dadurch gekennzeichnet, dass** das Verfahren ferner aufweist:
Bestimmen einer Werkstückdicke über die Steuerschaltung (112), die der ausgewählten Drahtvorschubgeschwindigkeit entspricht, als Reaktion auf die Auswahl der Drahtvorschubgeschwindigkeit; und
Anzeigen der Werkstückdicke auf einer Anzeigevorrichtung (116, 220).

## Revendications

1. Interface d'équipement de soudage (114, 156, 200), comprenant :
un premier bouton (210), un deuxième bouton (212), un troisième bouton (214) et un quatrième bouton (216) ;
un premier dispositif d'entrée (115) configuré pour régler une vitesse d'alimentation en fil ;
un affichage (116, 220) ;
étant **caractérisée par** :
un circuit de commande (112) configuré pour :
en réponse à une entrée provenant du premier bouton (210), sélectionner un processus de soudage de circuit de conversion de puissance sur base d'une séquence de processus de soudage ;
en réponse à une entrée provenant du deuxième bouton (212), sélectionner un type de fil d'électrode sur base d'une séquence de types de fils d'électrode ;
en réponse à une entrée provenant du troisième bouton (214), sélectionner une taille de fil d'électrode sur base d'une séquence de tailles de fil d'électrode ;
en réponse à une entrée provenant du quatrième bouton (216), sélectionner une composition de gaz de protection à partir d'une séquence de compositions de gaz de protection ;
sélectionner un programme de soudage sur base du processus de soudage, du type de fil d'électrode, de la taille du fil d'électrode et de la composition de gaz de protection ;
en réponse à une entrée provenant du premier dispositif d'entrée (115), sélectionner une vitesse d'alimentation en fil ;
sur base de la vitesse d'alimentation en fil sélectionnée, sélectionner automatiquement une tension sur base d'une relation entre la vitesse d'alimentation en fil et la tension, la relation étant sur base d'au moins un parmi le processus de soudage sélectionné, le type de fil d'électrode, la taille du fil d'électrode, ou la composition de gaz de protection ; et
commander au moins une parmi une sortie d'un circuit de conversion de puissance (110) sur base de la tension sélectionnée, ou une vitesse d'alimentation d'un dispositif d'alimentation en fil sur base de la vitesse d'alimentation en fil sélectionnée, dans lequel le circuit de commande (112) est en outre configuré pour déterminer une épaisseur de matériau correspondant à la vitesse d'alimentation en fil sélectionnée via le premier dispositif d'entrée (115) et pour afficher l'épaisseur de matériau sur l'affichage (116, 220).

2. Interface d'équipement de soudage (114, 156, 200) selon la revendication 1, dans laquelle le premier bouton (210), le deuxième bouton (212), le troisième bouton (214) et le quatrième bouton (216) comprennent au moins un parmi des boutons matériels ou des boutons logiciels mis en œuvre sur un affichage.

3. Interface d'équipement de soudage (114, 156, 200) selon la revendication 1, dans laquelle le circuit de commande (112) est en outre configuré pour
en réponse à l'entrée provenant du premier bouton (210), émettre une indication du processus de soudage via l'affichage (116, 220) ;
en réponse à une entrée provenant du deuxième bouton (212), émettre une indication du type de fil d'électrode via l'affichage (116, 220) ;
en réponse à une entrée provenant du troisième bouton (214), émettre une indication de la taille de fil d'électrode via l'affichage (116, 220) ; et
en réponse à une entrée provenant du quatrième bouton (216), émettre une indication de la composition de gaz de protection via l'affichage (116, 220).

4. Interface d'équipement de soudage (114, 156, 200) selon la revendication 1, dans laquelle le circuit de commande (112) est configuré pour sélectionner le programme de soudage en réponse à une entrée provenant d'un cinquième bouton (218).

5. Interface d'équipement de soudage (114, 156, 200) selon la revendication 4, dans laquelle le circuit de commande (112) est configuré pour, en réponse à une entrée provenant du cinquième bouton (218), afficher au moins un parmi le processus de soudage sélectionné, le type de fil d'électrode sélectionné, la taille de fil d'électrode sélectionnée, la composition de gaz de protection sélectionnée, l'épaisseur de matériau, la tension sélectionnée, ou la vitesse d'alimentation en fil sélectionnée.

6. Interface d'équipement de soudage (114, 156, 200) selon la revendication 1, comprenant en outre un circuit de conversion de puissance (110) configuré pour convertir une puissance d'entrée en puissance de soudage sur base de la tension, le circuit de commande (112) étant configuré pour commander le circuit de conversion de puissance (110).

7. Interface d'équipement de soudage (114, 156, 200) selon la revendication 1, comprenant en outre le dispositif d'alimentation en fil (104) configuré pour alimenter un fil d'électrode sur base de la vitesse d'alimentation en fil.

8. Interface d'équipement de soudage (114, 156, 200) selon la revendication 1, comprenant en outre un deuxième dispositif d'entrée (222), le circuit de commande (112) étant configuré pour modifier la tension sur base d'une entrée dans le deuxième dispositif d'entrée (222).

9. Interface d'équipement de soudage (114, 156, 200) selon la revendication 8, comprenant en outre un indicateur (230) configuré pour émettre une indication de si la tension se trouve dans une plage de tensions, supérieure à la plage de tensions, ou inférieure à la plage de tensions, le circuit de commande (112) étant configuré pour déterminer la plage de tensions sur base de la vitesse d'alimentation en fil sélectionnée via le deuxième dispositif d'entrée (222).

10. Alimentation électrique de type soudage (102), comprenant :
un circuit de conversion de puissance (110) configuré pour convertir une puissance d'entrée en une puissance de soudage sur base d'une tension de sortie ;
étant **caractérisé par** :
une interface d'équipement de soudage (114, 156, 200) selon l'une quelconque des revendications précédentes.

11. Procédé comprenant :
la réception, via un premier bouton (210), d'une sélection d'un processus de soudage à partir d'une séquence de processus de soudage ;
la réception, via un deuxième bouton (212), d'une sélection d'un type de fil d'électrode à partir d'une séquence de types de fils d'électrode ;
la réception, via un troisième bouton (214), d'une sélection d'une taille de fil d'électrode à partir d'une séquence de tailles de fil d'électrode ;
la réception, via un quatrième bouton (216), d'une sélection d'une composition de gaz de protection à partir d'une séquence de compositions de gaz de protection ;
la réception, via un dispositif d'entrée (115), d'une sélection d'une vitesse d'alimentation en fil ;
sur base de la vitesse d'alimentation en fil sélectionnée, la sélection, via un circuit de commande (112), d'une tension sur base d'une relation entre la vitesse d'alimentation en fil et la tension, la relation étant sur base d'au moins un parmi le processus de soudage sélectionné, le type de fil d'électrode, la taille de fil d'électrode, ou la composition de gaz de protection ; et
la commande, via le circuit de commande (112), d'au moins une parmi une sortie d'un circuit de conversion de puissance (110) sur base de la tension sélectionnée, ou une vitesse d'alimentation d'un dispositif d'alimentation en fil sur base de la vitesse d'alimentation en fil sélectionnée.
**caractérisé en ce que** le procédé comprend en outre :
la détermination, via le circuit de commande (112), d'une épaisseur de pièce à usiner correspondant à la vitesse d'alimentation en fil sélectionnée en réponse à la sélection de la vitesse d'alimentation en fil ; et
l'affichage de l'épaisseur de pièce à usiner sur un dispositif d'affichage (116, 220).
